# EUROPEAN PATENT APPLICATION

(11) **EP 1 551 156 A2**
(43) Date of publication of application: **06.07.2005**
(21) Application number: 04028378.0
(22) Date of filing: 30.11.2004
(51) Int. Cl.: H04M 1/02, H04M 1/725, G06F 3/02, H04M 1/03

(54) **Portable communication device with a rotatable split keyboard**

(30) Priority: 05.01.2004 KR 2004000264
(71) Applicant: Samsung Electronics Co., Ltd., Suwon-city, Gyeonggi-do (KR)
(72) Inventor: Kim, Jong-Woo co Samsung Electronics Co. Ltd., Suwon-si Gyeonggi-do (KR); Yoon, Young-Seok c/o Samsung Electronics Co. Ltd., Suwon-si Gyeonggi-do (KR); Hong, Yun-Jung c/o Samsung Electronics Co. Ltd., Suwon-si Gyeonggi-do (KR)
(74) Representative: Grünecker, Kinkeldey, Stockmair & Schwanhäusser Anwaltssozietät

(57) **Abstract**

A portable game/communication device that includes a first housing (100) having a first sliding side surface (104), a first swinging housing (120) having a second sliding side surface (126), the second sliding side surface (126) corresponding to the first sliding side surface (104), the first swinging housing (120) being connected to one side of the first housing (100) while being rotated about a first hinge axis, a second swinging housing (140) having a third sliding side surface (146), the third sliding side surface (146) corresponding to the first sliding side surface (104), the second swinging housing (140) being connected to the other side of the first housing (100) and being rotatable about a second hinge axis, the second hinge axis being spaced apart from the first hinge axis, and a second housing (180) rotatably connected to the first housing (100) such that the second housing (180) is rotatable near to and away from the first housing (100).

## Description

The present invention relates generally to a portable communication device including cellular phones, personal digital assistants, hand-held phones, digital communication devices, game phones, etc. and more particularly to a portable digital communication device that is usable as a game phone.

Generally, "portable communication devices" identifies devices that are portable and enable owners of the devices to communicate in a wireless way. Such portable communication devices have become increasingly small, slim, graspable, and lightweight, whereby portability thereof is improved. Further, portable communication devices have evolved to include multimedia capabilities, whereby the devices have various additional functions. More specifically, future portable communication terminals will be miniaturized, lightweight, multipurpose terminals with various functions, which will be easily adapted to various multimedia and Internet environments.

Of these various functions, portable communication devices can now operate in a game mode, i.e., be used to play video games. However, the conventional portable communication device has a problem in that a key operation is very inconvenient in a game mode. For example, many video games are played with both hands, rather than one hand of a user, which the conventional portable communication devices are designed for. Therefore, when a user uses both hands to play the game, it is difficult to perform the key operation quickly and accurately on the conventional portable communication device.

Therefore, the present invention has been designed in view of the above and other problems.

It is the object of the present invention to provide a portable communication device that enables a user to conveniently perform a key operation using both hands when playing a game.

This object is solved by the subject matter of the independent claims.

Preferred embodiments are defined in the dependent claims.

It is an aspect of the present invention to provide a portable communication device enabling rapid, accurate, and convenient key operation.

In accordance with one aspect of the present invention, the above object can be accomplished by a portable game/communication device including: a first housing having a first sliding side surface with a prescribed radius of curvature; a first swinging housing having a second sliding side surface with a prescribed radius of curvature, the second sliding side surface corresponding to the first sliding side surface, the first swinging housing being connected to one side of the first housing while being rotated about a first hinge axis; a second swinging housing having a third sliding side surface with a prescribed radius of curvature, the third sliding side surface corresponding to the first sliding side surface, the second swinging housing being connected to the other side of the first housing while being rotated about a second hinge axis such that the second swinging housing is near to or away from the first swinging housing, the second hinge axis being spaced apart from the first hinge axis; and a second housing that is rotatably connected to the first housing by means of a hinge unit such that the second housing is near to or away from the first housing.

In accordance with another aspect of the present invention, there is provided a portable game/communication device including: a first housing having a first sliding side surface having a prescribed radius of curvature; a first swinging housing provided with a second sliding side surface with a prescribed radius of curvature, the second sliding side surface corresponding to the first sliding side surface, the first swinging housing being connected to one side of the first housing while being rotated about a first hinge axis; a second swinging housing having a third sliding side surface with a prescribed radius of curvature, the third sliding side surface corresponding to the first sliding side surface, the second swinging housing being connected to the other side of the first housing while being rotated about a second hinge axis such that the second swinging housing is near to or away from the first swinging housing, the second hinge axis being spaced apart from the first hinge axis; a connection member having one end connected to a hinge unit, the connection member being rotated about a hinge axis of the hinge unit such that the connection member is near to or away from the first housing; and a rotary housing rotatably connected to the other end of the connection member while being opposite to the other end of the connection member such that the rotary housing is rotated about another hinge axis perpendicular to the hinge axis of the hinge unit.

In accordance with yet another aspect of the present invention, there is provided a portable game/communication device including: a first housing having a first top surface, a second top surface stepped from the first top surface, and a first sliding side surface disposed between the first and second top surfaces, the first sliding side surface having a prescribed radius of curvature; a first swinging housing slid while being opposite to the second top surface of the first housing, the first swinging housing being provided with a second sliding side surface having a prescribed radius of curvature, the second sliding side surface corresponding to the first sliding side surface, the first swinging housing being connected to one side of the first housing while being rotated about a first hinge axis; a second swinging housing slid while being opposite to the second top surface of the first housing, the second swinging housing being provided with a third sliding side surface having a prescribed radius of curvature, the third sliding side surface corresponding to the first sliding side surface, the second swinging housing being connected to the other side of the first housing while being rotated about a second hinge axis such that the second swinging housing is near to or away from the first swinging housing, the second hinge axis being spaced apart from the first hinge axis; and a second housing rotatably connected to the first housing by means of a hinge unit such that the second housing is near to or away from the first housing.

The above object and aspects, features, and advantages of the present invention will be more clearly understood from the following detailed description taken in conjunction with the accompanying drawings, in which:
FIG. 1 is a front view illustrating a portable game/communication device according to a first preferred embodiment of the present invention;
FIG. 2 is a bottom view illustrating the portable game/communication device according to the first preferred embodiment of the present invention;
FIG. 3 is a front view of the portable game/communication device according to the first preferred embodiment of the present invention illustrating a second housing of the device fully opened;
FIG. 4 is a front view of the portable game/communication device of FIG. 3 illustrating first and second swinging housings of the device fully rotated;
FIG. 5 is a front view illustrating a portable game/communication device according to a second preferred embodiment of the present invention;
FIG. 6 is a bottom view illustrating the portable game/communication device according to the second preferred embodiment of the present invention;
FIG. 7 is a front view of the portable game/communication device according to the second preferred embodiment of the present invention illustrating a second housing of the device fully opened;
FIG. 8 is a front view of the portable game/communication device of FIG. 7 illustrating the second housing and first and second swinging housings of the device fully rotated;
FIG. 9 is a front view illustrating a portable game/communication device according to a third preferred embodiment of the present invention;
FIG. 10 is a bottom view illustrating the portable game/communication device according to the third preferred embodiment of the present invention;
FIG. 11 is a side view of the portable game/communication device illustrated in FIG. 9.
FIG. 12 is a front view of the portable game/communication device according to the third preferred embodiment of the present invention illustrating a second housing of the device fully opened; and
FIG. 13 is a front view of the portable game/communication device of FIG. 12 illustrating first and second swinging housings of the device fully rotated.

Preferred embodiments of the present invention will be described in detail herein below with reference to the accompanying drawings. In the following, a detailed description of known functions and configurations incorporated herein will be omitted when it may obscure the subject matter of the present invention.

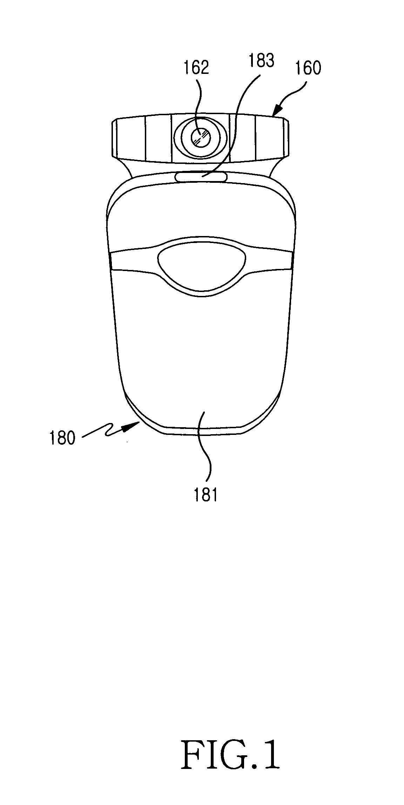

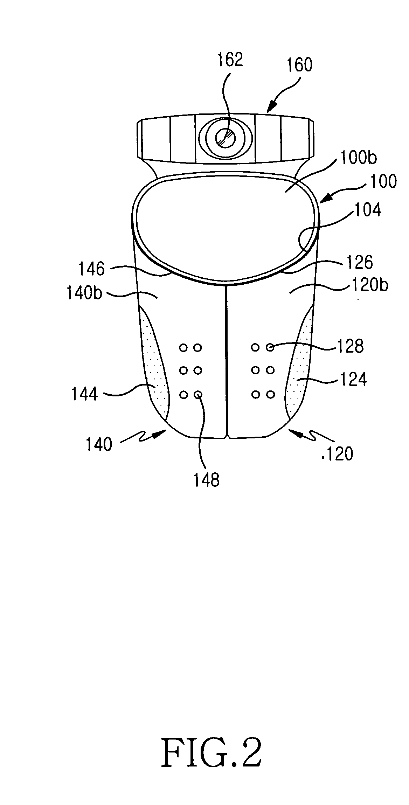

As illustrated in FIGS. 1 to 4, a portable communication device according to a first preferred embodiment of the present invention is a portable device usable as a game phone. In other words, the portable communication device of the present invention enables a user to use both hands when a game is played, thereby accomplishing rapid, accurate, and convenient key operation.

Referring to Figs. 1-4, the portable digital communication device according to the first preferred embodiment of the present invention includes a first housing 100, a first swinging housing 120 connected to one side of the first housing 100 while being rotated about a first hinge axis, a second swinging housing 140 connected to the other side of the first housing 100 while being rotated about a second hinge axis, such that the second swinging housing 140 can be positioned near to or away from the first swinging housing 120, and a second housing 180 that is rotatably connected to the first housing 100 by means of a hinge unit 160, such that the second housing 180 can be positioned near to and away from the first housing 100.

The first housing 100 includes a first sliding side surface 104 that has a prescribed radius of curvature. Also, the first housing 100 has a top surface 100a, on which a first key array 102, which preferably includes a plurality of keys, is disposed.

The first swinging housing 120 includes a second sliding side surface 126, having the same radius of curvature as the first sliding side surface 104, such that the second sliding side surface 126 corresponds to the first sliding side surface 104. Also, the first swinging housing 120 has a top surface 120a, on which a second key array 122, which preferably includes a plurality of keys, is disposed. The first swinging housing 120 is further provided at the outer edge thereof with a first elastic member 124. Preferably, the first elastic member 124 is made of rubber to maximize the frictional force of the first elastic member 124. The swinging operation of the first swinging housing 120 is easily performed using the first elastic member 124.

The second swinging housing 140 includes a third sliding side surface 146 with the same radius of curvature as the first sliding side surface 104, such that the third sliding side surface 146 corresponds to the first sliding side surface 104. Also, the second swinging housing 140 has a top surface 140a, on which a third key array 142 is disposed. The second swinging housing 140 is further provided at the outer edge thereof with a second elastic member 144. Preferably, the second elastic member 144 is made of rubber to maximize the frictional force of the second elastic member 144. The swinging operation of the second swinging housing 140 is easily performed using the second elastic member 144.

Rotating angles of the first and second swinging housings 120 and 140 are not necessarily restricted to approximately 30 degrees. For example, the first and second swinging housings 120 and 140 may have rotating angles of more than 30 degrees.

The first and second swinging housings 120 and 140 have bottom surfaces 120b and 140b, on which a first speaker unit 128 and a second speaker unit 148 are mounted, respectively. The first and second speaker units 128 and 148 generate stereophonic sound, which is transmitted to a user of the portable communication device.

The first key array 102 includes direction keys, menu keys, a cancel key, and a communication key, and each of the second and third key arrays 122 and 142 preferably includes numerical keys and character keys.

The second housing 180 has a top surface 180a, on which a battery pack 181 is disposed. The battery pack 181 is detachably attached to the top surface 180a by means of a locking knob 183. Also, the second housing 180 has a bottom surface 180b, on which a single speaker unit 182 and a display unit 184 are disposed. The display unit 184 is adjacent to the single speaker unit 182. The display unit 184 may be an LCD, a touch screen, a holographic screen, etc.

The hinge unit 160 further includes a camera lens 162. A lens housing, in which the camera lens 162 is mounted, is rotatably connected to the hinge unit 160 while being coaxial to a hinge axis A of the hinge unit 160. The rotation of the lens housing is performed in the range of prescribed angles.

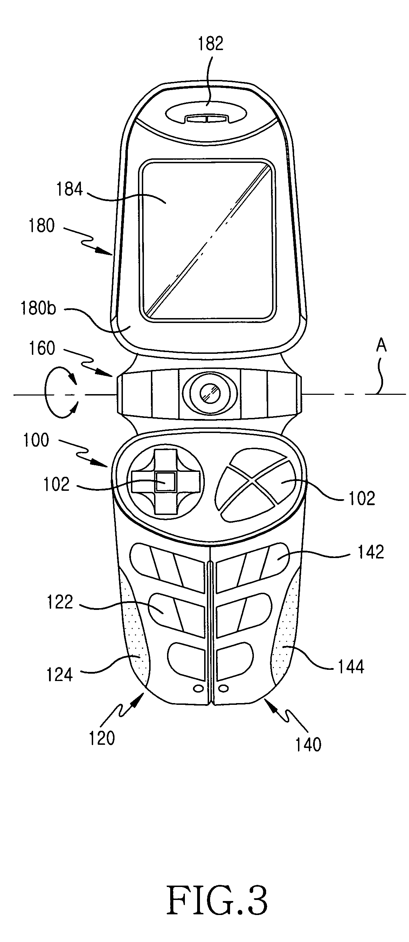

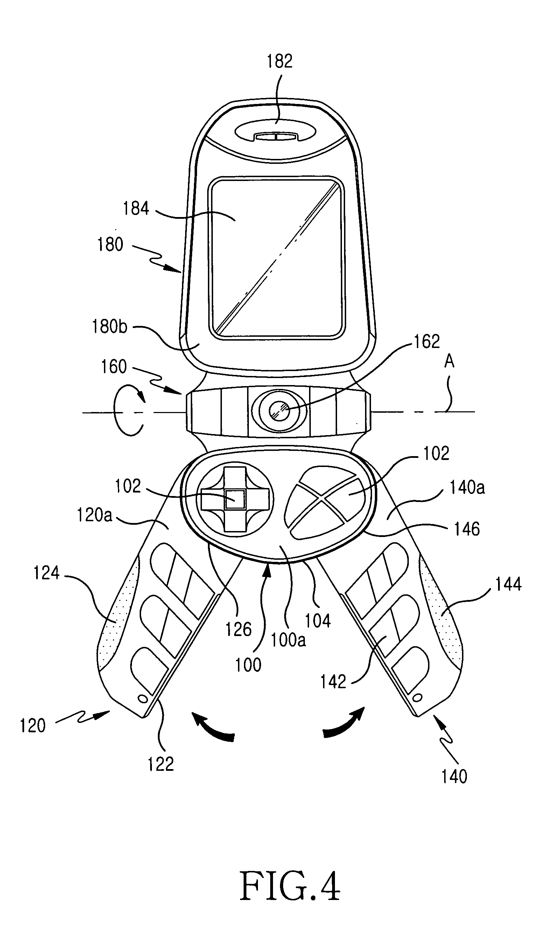

When the first and second swinging housings 120 and 140 and the second housing 180 are fully rotated from the first housing 100, the communication device is arranged in the shape of an inverted "Y" as illustrated in FIG. 4. The "Y"-shaped arrangement of the first housing 100, the second housing 180, and the first and second swinging housings 120 and 140 places the communication device in a shape of video game control pad, thereby enabling a user to conveniently perform a key operation with both hands. Of course, some users may prefer to conveniently perform a key operation in the arrangement of the communication device as illustrated in FIG. 3.

When the first and second swinging housings 120 and 140 are fully rotated about the first and second hinge axes from the first housing 100, respectively, i.e., when the first and second swinging housings 120 and 140 are swung such that the first and second swinging housings 120 and 140 are farthest from each other, the first and second swinging housings 120 and 140 are arranged in the shape of an inverted "V".

The first hinge axis is arranged in the direction perpendicular to the top surface 100a of the first housing 100. The second hinge axis is arranged in the direction perpendicular to the top surface 100a of the first housing 100. The first and second hinge axes are spaced a prescribed distance from each other. Further, the first and second hinge axes are arranged in the direction perpendicular to the hinge axis of the hinge unit.

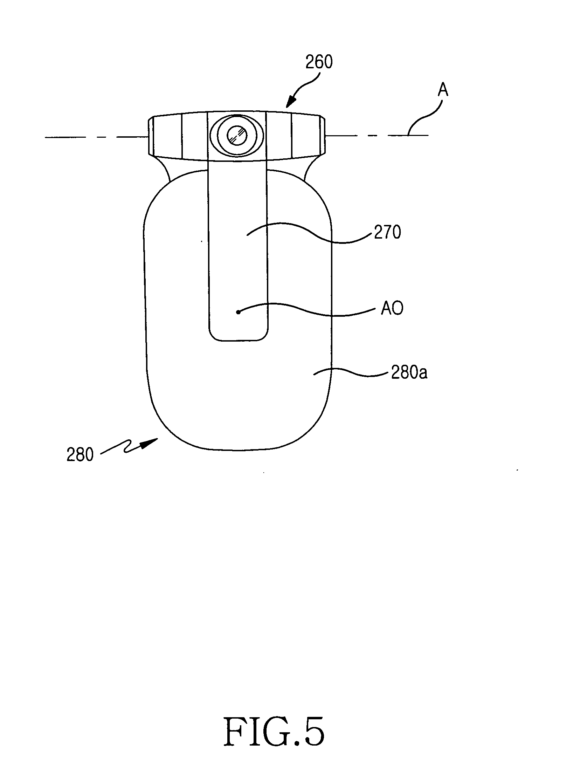

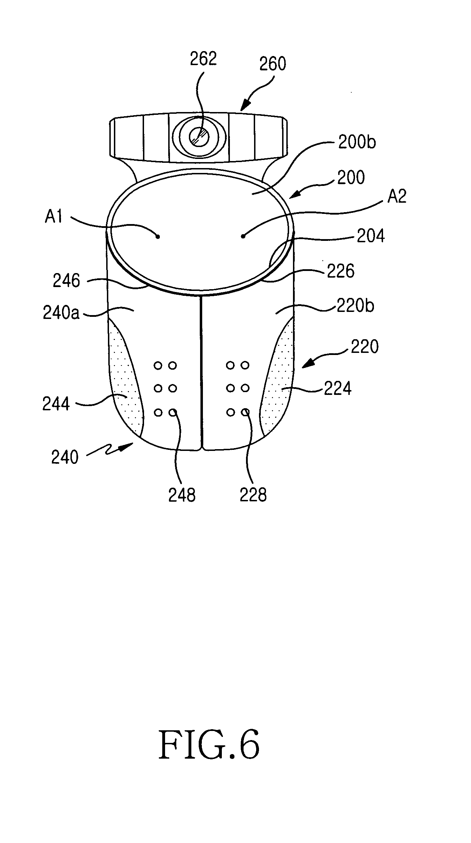

FIGS. 5 to 8 illustrate a portable communication device according to a second preferred embodiment of the present invention, in which a portable device is usable as a game phone. The portable digital communication device according to the second preferred embodiment of the present invention includes: a first housing 200; a first swinging housing 220 connected to one side of the first housing 200 while being rotated about a first hinge axis; a second swinging housing 240 connected to the other side of the first housing 200 while being rotated about a second hinge axis such that the second swinging housing 240 can be positioned near to and away from the first swinging housing 220; a connection member 270 rotatably connected to the first housing 200 by means of a hinge unit 260 such that the connection member 270 can be positioned near to and away from the first housing 200; and a rotary housing 280 rotated while being opposite to the connection member 270.

The first housing 200 includes a first sliding side surface 204 having a prescribed radius of curvature. Also, the first housing 200 has a top surface 200a, on which a first key array 202 that includes a plurality of keys is disposed.

The first swinging housing 220 includes a second sliding side surface 226 having the same radius of curvature as the first sliding side surface 204, such that the second sliding side surface 126 corresponds to the first sliding side surface 204. Also, the first swinging housing 220 has a top surface 220a, on which a second key array 222, including a plurality of keys, is disposed. The first swinging housing 220 is further provided at the outer edge thereof with a first elastic member 224. Preferably, the first elastic member 224 is made of rubber to maximize the frictional force of the first elastic member 224. The swinging operation of the first swinging housing 220 is easily carried out by means of the first elastic member 224.

The second swinging housing 240 includes a third sliding side surface 246 having the same radius of curvature as the first sliding side surface 204, such that the third sliding side surface 246 corresponds to the first sliding side surface 204. Also, the second singing housing 240 has a top surface 240a, on which a third key array 242, including a plurality of keys, is disposed. The second swinging housing 240 is further provided at the outer edge thereof with a second elastic member 244. Preferably, the second elastic member 244 is made of rubber to maximize the frictional force of the second elastic member 244. The swinging operation of the second swinging housing 240 is easily performed using the second elastic member 244.

Rotating angles of the first and second swinging housings 220 and 240 are not necessarily restricted to approximately 30 degrees. For example, the first and second swinging housings 220 and 240 may have rotating angles of more than 30 degrees.

The first and second swinging housings 220 and 240 have bottom surfaces 220b and 240b, on which a first speaker unit 228 and a second speaker unit 248 are mounted, respectively. The first and second speaker units 228 and 248 generate stereophonic sound, which is transmitted to a user of the portable communication device.

Preferably, the first key array 202 includes direction keys, menu keys, a cancel key, and a communication key, and each of the second and third key arrays 222 and 242 includes numerical keys and character keys.

The second housing 280 has a top surface 280a, on which a battery pack 281 is disposed. The battery pack 281 is detachably attached to the top surface 280a by means of a locking knob 283. Also, the second housing 280 has a bottom surface 280b, on which a single speaker unit 282 and a display unit 284 are disposed. The display unit 284 is adjacent to the single speaker unit 282. The display unit 284 may be an LCD, a touch screen, or a holographic screen.

The hinge unit 260 may further includes a camera lens 262. A lens housing, in which the camera lens 262 is mounted, is rotatably connected to the hinge unit 260 while being coaxial to a hinge axis A of the hinge unit 260. The rotation of the lens housing is performed in the range of prescribed angles.

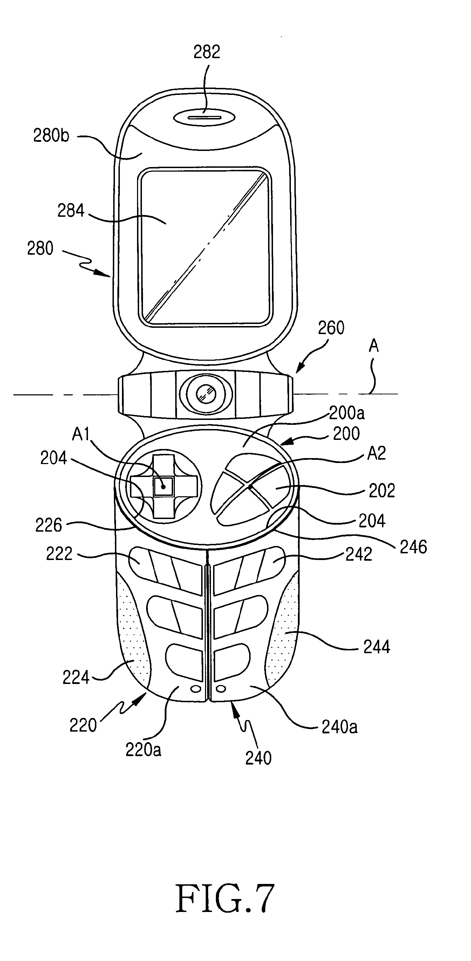

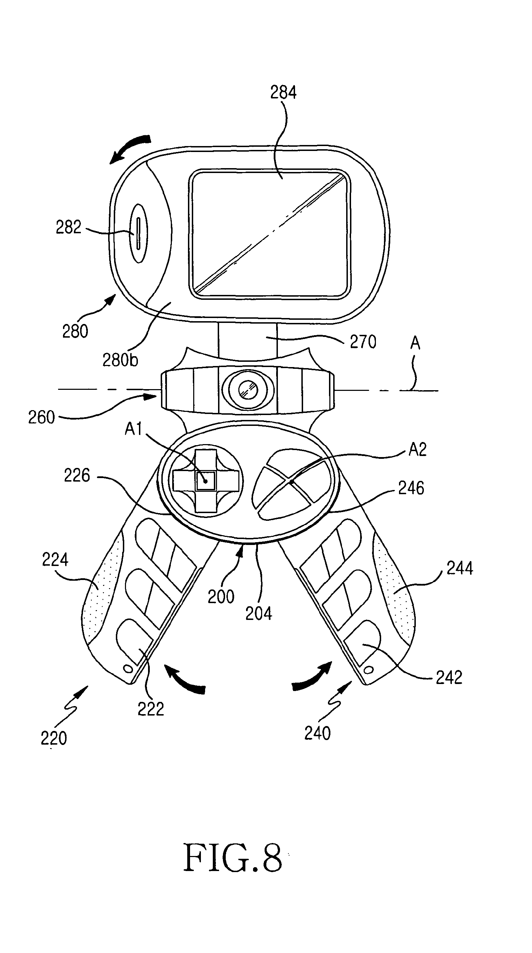

When the first and second swinging housings 220 and 240 and the second housing 280 are fully rotated from the first housing 200, the communication device is arranged in the shape of an inverted "Y" as illustrated in FIG. 8. The "Y"-shaped arrangement of the first housing 200, the second housing 280, and the first and second swinging housings 220 and 240 allows a user to conveniently perform a key operation with both hands. Of course, some users may conveniently perform a key operation in the arrangement of the communication device as illustrated in FIG. 7.

When the first and second swinging housings 220 and 240 are fully rotated about the first and second hinge axes from the first housing 200, respectively, i.e., when the first and second swinging housings 220 and 240 are swung such that the first and second swinging housings 220 and 240 are farthest from each other, the first and second swinging housings 220 and 240 are arranged in the shape of an inverted "V".

The first hinge axis A1 is arranged in the direction perpendicular to the top surface 200a of the first housing 200. The second hinge axis A2 is arranged in the direction perpendicular to the top surface 200a of the first housing 200. The first and second hinge axes A1 and A2 are spaced a prescribed distance from each other. Further the first and second hinge axes A1 and A2 are arranged in the direction perpendicular to the hinge axis A of the hinge unit.

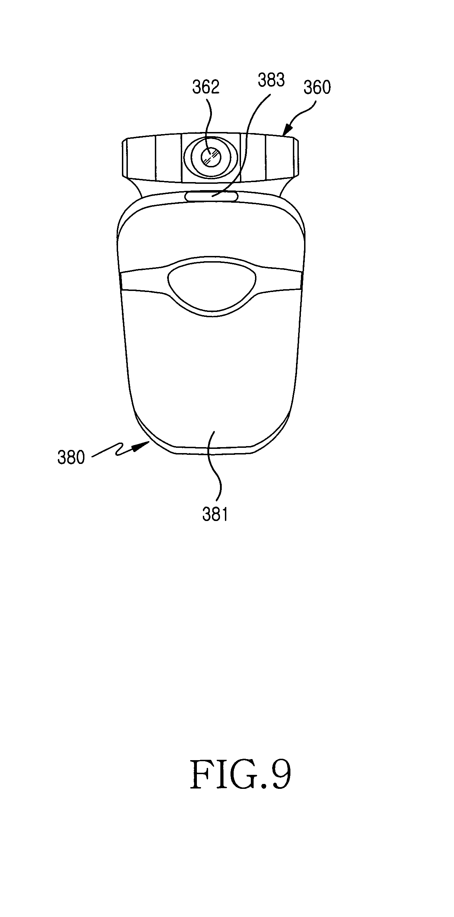

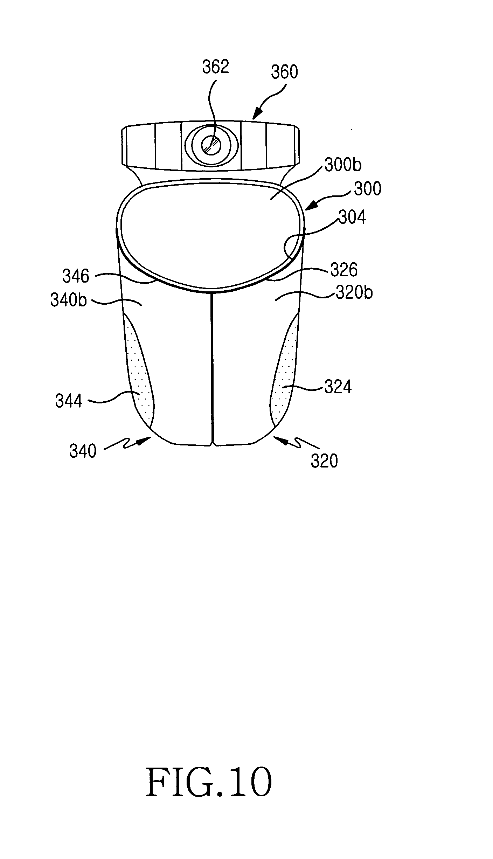

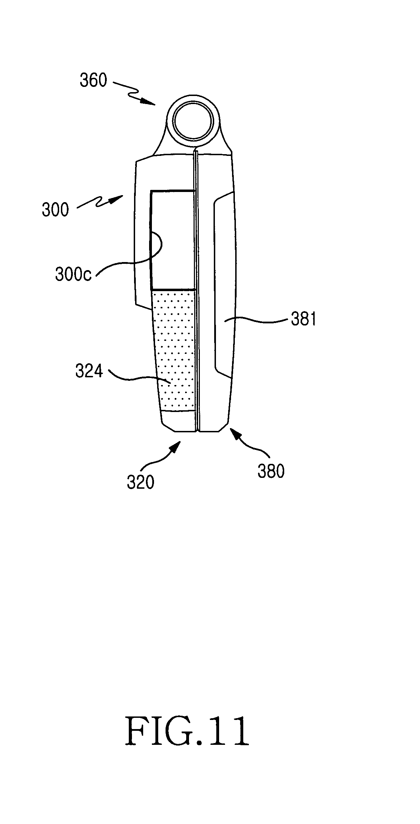

FIGS. 9 to 13 illustrate a portable communication device according to a third preferred embodiment of the present invention. Referring to FIGS. 9 to 13, the portable communication device includes: a first housing 300; a first swinging housing 320 connected to one side of the first housing 300 while being rotated about a first hinge axis; a second swinging housing 340 connected to the other side of the first housing 300 while being rotated about a second hinge axis such that the second swinging housing 340 is near to or away from the first swinging housing 320; and a second housing 380 rotatably connected to the first housing 300 by means of a hinge unit 360 such that the second housing 380 is near to or away from the first housing 300.

The first housing 100 has a first top surface 300a, a second top surface 300c stepped from the first top surface 300a, and a first sliding side surface 304 disposed between the first and second top surfaces 300a and 300c. The first sliding side surface 304 has a prescribed radius of curvature. On the first top surface 300a of the first housing 300 is disposed a first key array 302 that includes a plurality of keys. On the second top surface 300c of the first housing 300 are disposed a plurality of speaker units 330 and 332. Preferably, the speaker units 330 and 332 are disposed in a pair while being opposite to each other such that stereophonic sound is transmitted to a user of the communication device. However, an alternate construction could also only use one of speakers 330 or 332.

The first swinging housing 320 includes a second sliding side surface 326 having the same radius of curvature as the first sliding side surface 304, such that the second sliding side surface 326 corresponds to the first sliding side surface 304. Also, the first swinging housing 320 has a top surface 320a, on which a second key array 322 comprising a plurality of keys is disposed. The first swinging housing 320 is further provided at the outer edge thereof with a first elastic member 324. Preferably, the first elastic member 324 is made of rubber, such that the frictional force of the first elastic member 324 is maximized. The swinging operation of the first swinging housing 320 is easily performed using the first elastic member 324.

The second swinging housing 340 includes a third sliding side surface 346 having the same radius of curvature as the first sliding side surface 304, such that the third sliding side surface 346 corresponds to the first sliding side surface 304. Also, the second swinging housing 340 has a top surface 340a, on which a third key array 342 that includes a plurality of keys is disposed. The second swinging housing 340 also includes a second elastic member 344 at the outer edge thereof. Preferably, the second elastic member 344 is made of rubber, such that the frictional force of the second elastic member 344 is maximized. The swinging operation of the second swinging housing 340 is easily performed using the second elastic member 344.

Rotating angles of the first and second swinging housings 320 and 340 are not necessarily restricted to approximately 30 degrees. As indicated above, the first and second swinging housings 320 and 340 may have rotating angles of more than 30 degrees.

The first and second swinging housings 320 and 340 have bottom surfaces 320b and 340b, on which a first speaker unit 328 and a second speaker unit 348 are mounted, respectively. The first and second speaker units 328 and 348 generate stereophonic sound, which is transmitted to a user of the portable digital communication device.

Preferably, the first key array 302 includes direction keys, menu keys, a cancel key, and a communication key, and each of the second and third key arrays 322 and 342 includes numeric keys and character keys.

The second housing 380 has a top surface 380a, on which a battery pack 381 is disposed. The battery pack 381 is detachably attached to the top surface 380a by means of a locking knob 383. Also, the second housing 380 has a bottom surface 380b, on which a single speaker unit 382 and a display unit 384 are disposed. The display unit 384 is adjacent to the single speaker unit 382. The display unit 384 may be an LCD, a touch screen, or a holographic screen.

Additionally, the hinge unit 360 may further include a camera lens 362. A lens housing, in which the camera lens 362 is mounted, is rotatably connected to the hinge unit 360 while being coaxial to a hinge axis A of the hinge unit 360. The rotation of the lens housing is performed in the range of prescribed angles.

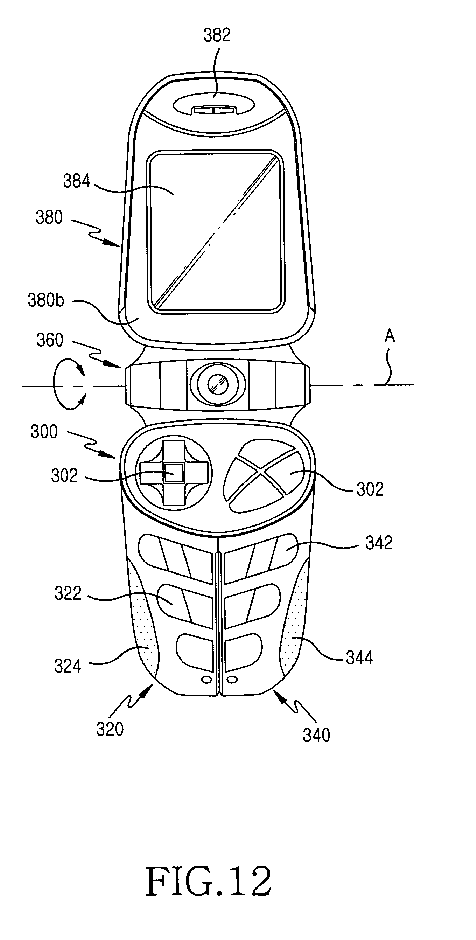

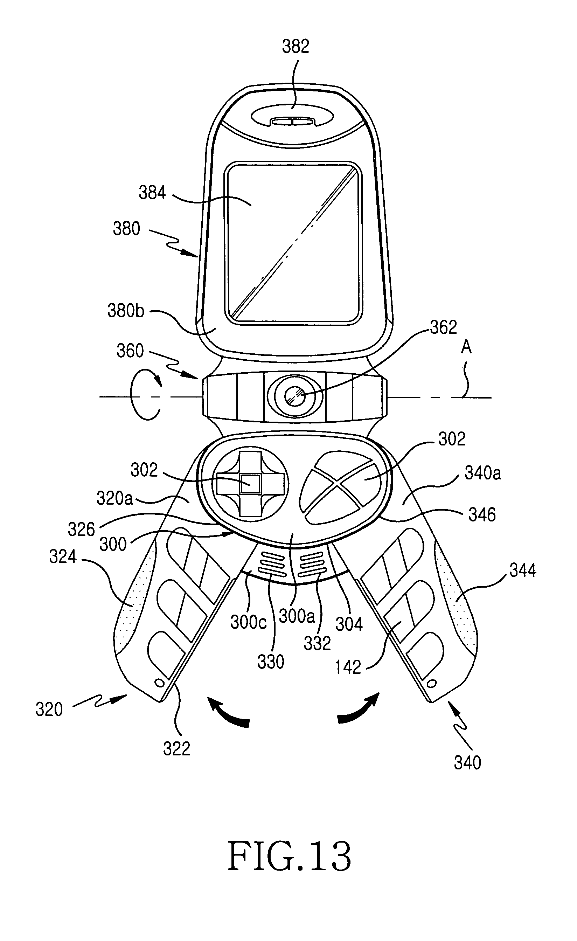

When the first and second swinging housings 320 and 340 and the second housing 380 are fully rotated from the first housing 300, the communication device is arranged in the shape of an inverted "Y" as illustrated in FIG. 13. The "Y"-shaped arrangement of the first housing 300, the second housing 380, and the first and second swinging housings 320 and 340 allows a user to conveniently perform a key operation with both hands. Additionally, some users may prefer to conveniently perform a key operation in the arrangement of the communication device as illustrated in FIG. 12.

When the first and second swinging housings 320 and 340 are fully rotated about the first and second hinge axes from the first housing 300, respectively, i.e., when the first and second swinging housings 320 and 340 are swung such that the first and second swinging housings 320 and 340 are farthest from each other, the first and second swinging housings 320 and 340 are arranged in the shape of an inverted "V".

The first hinge axis is arranged in the direction perpendicular to the top surface 300a of the first housing 300. The second hinge axis is arranged in the direction perpendicular to the top surface 300a of the first housing 300. The first and second hinge axes are spaced a prescribed distance from each other. Furthermore, the first and second hinge axes are arranged in the direction perpendicular to the hinge axis A of the hinge unit.

As is apparent from the description above, the present invention provides a portable game/communication device that enables a user to conveniently perform a key operation when a game is played. Further, the portable game/communication device provides a wide display unit, which is useful for gaming.

Although preferred embodiments of the present invention have been disclosed for illustrative purposes, those skilled in the art will appreciate that various modifications, additions, and substitutions are possible, without departing from the scope of the present invention as disclosed in the accompanying claims.

## Claims

1. A portable game/communication device, comprising:
a first housing including a first sliding side surface having a prescribed radius of curvature;
a first swinging housing including a second sliding side surface having a prescribed radius of curvature, the second sliding side surface corresponding to the first sliding side surface, the first swinging housing being connected to one side of the first housing and being rotatable about a first hinge axis;
a second swinging housing including a third sliding side surface having a prescribed radius of curvature, the third sliding side surface corresponding to the first sliding side surface, the second swinging housing being connected to the other side of the first housing and being rotatable about a second hinge axis, such that the second swinging housing moves near to and away from the first swinging housing, the second hinge axis being spaced apart from the first hinge axis; and
a second housing rotatably connected to the first housing by means of a hinge unit, such that the second housing is moveable near to and away from the first housing about the hinge unit.

2. The device as set forth in claim 1, wherein the first housing includes a first key array on a surface thereof, the first swinging housing includes a second key array on a surface thereof, and the second swinging housing includes a third key array on a surface thereof.

3. The device as set forth in claim 1 or 2, wherein the second housing includes a battery pack mounted on a surface thereof, and a single speaker unit and a display unit mounted an opposite surface thereof.

4. The device as set forth in one of claims 1 to 3, wherein the first and second swinging housings include elastic members formed in prescribed shapes, respectively, at the outer edges thereof.

5. A portable game/communication device comprising:
a first housing including a first sliding side surface having a prescribed radius of curvature;
a first swinging housing including a second sliding side surface having a prescribed radius of curvature, the second sliding side surface corresponding to the first sliding side surface, the first swinging housing being connected to one side of the first housing and being rotatable about a first hinge axis;
a second swinging housing including a third sliding side surface having a prescribed radius of curvature, the third sliding side surface corresponding to the first sliding side surface, the second swinging housing being connected to another side of the first housing and being rotatable about a second hinge axis, such that the second swinging housing is moveable near to and away from the first swinging housing, the second hinge axis being spaced apart from the first hinge axis;
a connection member having one end connected to a hinge unit, the connection member being rotated about a hinge axis of the hinge unit, such that the connection member is rotatable near to and away from the first housing about the hinge axis of the hinge unit; and
a rotary housing rotatably connected to another end of the connection member and being opposite to the other end of the connection member, such that the rotary housing is rotated about another hinge axis perpendicular to the hinge axis of the hinge unit.

6. The device as set forth in claim 5, wherein the first housing includes a first key array on a surface thereof, the first swinging housing includes second key array on a surface thereof, and the second swinging housing includes third key array on a surface thereof.

7. The device as set forth in claim 5 or 6, wherein the rotary housing includes a first speaker unit and a display unit mounted on the bottom surface thereof.

8. The device as set forth in one of claims 5 to 7, wherein the first swinging housing and the second swinging housing include elastic members formed in prescribed shapes, respectively, at prescribed areas of the side surfaces thereof.

9. The device as set forth in claim 4 or 8, wherein the elastic members are made of rubber.

10. The device as set forth in claim 4 or 8, wherein the hinge unit includes a camera lens.

11. The device as set forth in claim 4 or 8, wherein the device is arranged in the shape of an inverted "Y" when the first swinging housing, the second swinging housing, and the second housing are fully rotated away from the first housing.

12. The device as set forth in claim 4 or 8, wherein the first swinging housing and the second swinging housing each include at least one speaker unit mounted on a surface thereof.

13. The device as set forth in claim 4 or 8, wherein the first swinging housing and the second swinging housing are symmetrical to each other.

14. The device as set forth in claim 13, wherein the first swinging housing and the second swinging housing are arranged in a shape of an inverted "V" when the first swinging housing and the second swinging housing are fully rotated about the first and second hinge axes from the first housing, respectively.

15. A portable game/communication device comprising:
a first housing including a first top surface, a second top surface, which is stepped from the first top surface, and a first sliding side surface disposed between the first and second top surfaces, the first sliding side surface having a prescribed radius of curvature;
a first swinging housing that is slidable and opposite to the second top surface of the first housing, the first swinging housing including a second sliding side surface having a prescribed radius of curvature, the second sliding side surface corresponding to the first sliding side surface, the first swinging housing being connected to one side of the first housing and being rotatable about a first hinge axis;
a second swinging housing that is slidable and opposite to the second top surface of the first housing, the second swinging housing including a third sliding side surface having a prescribed radius of curvature, the third sliding side surface corresponding to the first sliding side surface, the second swinging housing being connected to the other side of the first housing and being rotatable about a second hinge axis such that the second swinging housing is moveable near to and away from the first swinging housing, the second hinge axis being spaced apart from the first hinge axis; and
a second housing rotatably connected to the first housing by means of a hinge unit, such that the second housing is rotatable near to and away from the first housing about the hinge unit.

16. The device as set forth in claim 15, wherein the first housing includes a first key array on a surface thereof, the first swinging housing includes a second key array on a surface thereof, and the second swinging housing includes a third key array on a surface thereof.

17. The device as set forth in claim 16, wherein the first housing includes at least one speaker unit on the second top surface thereof.

18. The device as set forth in claim 16, wherein the speaker units are disposed while being opposite to each other for generating stereophonic sound.
